# FASCICULE DE BREVET EUROPEEN

(11) **EP 3 221 159 B1**
(45) Date de publication et mention de la délivrance du brevet: **11.07.2018**
(21) Numéro de dépôt: 15812879.3
(22) Date de dépôt: 20.11.2015
(51) Int. Cl.: B60C 11/03, B60C 11/12, B60C 11/13

(54) **PNEUMATIQUE AVEC UNE ADHÉRENCE AMÉLIORÉE SUR SOL HUMIDE À L'ÉTAT D'USURE**
REIFEN MIT VERBESSERTER NASSHAFTUNG IN EINEM TEILVERSCHLISSENEN ZUSTAND
TYRE WITH IMPROVED WET GRIP IN A PART-WORN STATE

(30) Priorité: 21.11.2014 FR 1461292
(43) Date de publication de la demande: 27.09.2017
(73) Titulaire: Compagnie Générale des Etablissements Michelin, 63000 Clermont-Ferrand (FR)
(72) Inventeur: LEDIEU, Vincent, 63040 Clermont-ferrand Cedex9 - (FR); BATNINI, Illyes, 63040 Clermont-ferrand Cedex 9 (FR); FABING, Daniel, 63040 Clermont-ferrand Cedex 9 (FR); DEROBERT-MAZURE, Jean-Charles, 63040 Clermont-ferrand Cedex 9 (FR)
(74) Mandataire: Demaure, Pierre-Yves
(86) Numéro de dépôt international: PCT/FR2015/053163
(87) Numéro de publication internationale: WO 2016/079456

(56) Documents cités:
- FR-A1- 2 998 512
- JP-A- H07 285 303
- JP-A- S63 106 114
- JP-A- 2001 219 718
- US-A1- 2007 295 434

## Description

L'invention concerne le domaine des pneumatiques destinés à équiper un véhicule de tourisme et utilisables en hiver.
Plus particulièrement, l'invention concerne un pneumatique présentant des performances améliorées, à l'état d'usure, sur des sols mouillés.

L'adhérence d'un pneumatique sur la surface d'une route est un élément critique pour qu'un conducteur d'un véhicule puisse maitriser sa vitesse et sa direction lors d'un roulage. Cette adhérence devient encore plus critique en hiver sur un sol mouillé, où rentre en jeu une couche d'eau, que le pneu doit pouvoir évacuer à défaut de quoi le conducteur risque de perdre tout contrôle sur son véhicule. Le document US20070295434-A1 montre un pneumatique selon le préambule de la revendication 1.

On connait du document FR2291879 un profil de pneumatique permettant d'améliorer la sécurité d'un tel véhicule roulant sur une chaussée mouillée. Ce profil consiste en une pluralité de rainures en forme de demi-paraboles partant de la partie médiane de la bande de roulement du pneu vers les deux extrémités. De cette manière, l'eau se trouvant sur la route et pénétrant dans le profil du pneumatique est refoulée vers les cotés, ce qui permet d'éliminer cette couche d'eau et améliorer de ce fait l'adhérence du véhicule.

Tant que la bande de roulement est en bonne état, l'évacuation de cette couche d'eau est efficace. Cependant, cette efficacité diminue avec l'usure du pneu et la conduite devient dangereuse à partir d'un certain taux d'usure si le pneu n'est pas changé rapidement.

L'objectif de l'invention est de fournir un pneumatique ayant une adhérence renforcée sur sol mouillé lorsque la bande de roulement dudit pneu est usée.

Dans la description qui va suivre nous entendons par :
- Bande de roulement d'un pneumatique, une quantité de matériau caoutchoutique délimitée par des surfaces latérales et par deux surfaces principales dont l'une est destinée à entrer en contact avec la chaussée lorsque le pneumatique roule ;
- Direction circonférentielle, la direction qui est tangente à tout cercle, par exemple au cercle formé par un pneumatique, et centré sur un axe de rotation ;
- Taux d'usure, de la bande de roulement, le ratio entre une épaisseur que la bande de roulement a perdu par l'usure et l'épaisseur totale que la bande de roulement peut perdre avant de devoir être remplacée. Ainsi, un taux d'usure de 25% signifie que la bande de roulement a perdu un quart du matériau caoutchoutique à user ;
- Taux d'entaillement surfacique d'une bande de roulement, la quantité de creux présente sur la surface de roulement de cette bande de roulement. Ce creux est notamment généré par les rainures de la bande de roulement.

L'invention concerne un pneumatique tel que défini dans la revendication 1, comportant une bande de roulement comprenant une pluralité de rainures principales disposées de part et d'autre d'un plan médian X-X', chacune de ces rainures principales débouchant axialement à l'extérieur de ladite bande de roulement et se prolongeant axialement vers le plan médian X-X' de sorte que la pluralité des rainures principales forme un motif de forme générale en V, caractérisé en ce que, à partir d'un certain taux d'usure déterminé, au moins une rainure additionnelle apparaît entre deux rainures principales adjacentes circonférentiellement, désignées (N-1, N), ladite rainure additionnelle s'étendant globalement parallèlement auxdites rainures principales (N-1, N).

Ainsi, selon l'invention, au moins une rainure additionnelle est prévue, entre chaque couple de rainures principales circonférentiellement adjacentes (N-1, N) de sorte qu'elle apparaisse à partir d'un certain taux d'usure. Ladite rainure additionnelle contribue à l'évacuation de l'eau se trouvant entre la bande du pneumatique et la chaussée. Ainsi, cette rainure additionnelle compense au moins partiellement la perte d'efficacité d'évacuation d'eau subie par les rainures principales (N-1, N), due à l'usure de la bande de roulement du pneumatique. Cette compensation permet donc de maintenir une bonne évacuation de l'eau et en conséquence une bonne adhérence du pneumatique sur un sol humide malgré l'usure dudit pneumatique.

Selon l'invention à partir du taux d'usure déterminé, au moins une rainure intermédiaire apparaît entre les deux rainures principales adjacentes (N-1, N) et en ce que, le motif des rainures principales pointant selon une direction R, correspondant à un sens de rotation préférentiel, la rainure intermédiaire s'étend à partir d'une des rainures principales selon cette direction R, en coupant la rainure additionnelle, de sorte à former un réseau de rainures. Ce réseau de rainures, composé d'une rainure intermédiaire et une rainure additionnelle, permet d'améliorer l'évacuation de l'eau hors de la bande de roulement au cours du roulage du pneumatique.

Selon une réalisation de l'invention, ladite rainure intermédiaire débouche dans chacune des rainures principales adjacentes (N-1, N).

Selon un autre mode de réalisation le réseau de rainures est délimité en partie par au moins un pont de gomme. Ce pont de gomme permet d'adapter facilement les dimensions du réseau de rainures à la capacité d'évacuation de l'eau souhaitée. En effet, le nombre et la position de ponts de gomme sont adaptés selon la capacité d'évacuation d'eau souhaitée.

Avantageusement, le pont de gomme comporte une paroi inclinée vers l'intérieur du réseau de rainures. Une telle inclinaison favorise la circulation de l'eau à l'intérieur du réseau de rainures. On entend par intérieur du réseau de rainures le volume formé par une rainure intermédiaire et une rainure additionnelle d'un même réseau. En présence d'une telle paroi inclinée, l'eau arrivant à la rainure additionnelle est accélérée en descendant ladite paroi inclinée. Cette accélération permet une évacuation rapide de cette eau, à travers la rainure intermédiaire, vers la rainure principale dans laquelle elle débouche.

Selon une application particulière, la paroi inclinée comporte une incision s'étendant selon l'inclinaison de cette paroi inclinée. L'ajout d'une telle incision permet de donner plus de souplesse à la bande de roulement au niveau du pont de gomme. Avec cette souplesse, la mise à plat de la bande de roulement est améliorée et ainsi, le fonctionnement global du pneumatique l'est aussi.

Selon une variante, le réseau de rainures, ayant une extrémité amont, et une extrémité aval débouchant dans la rainure principale N, présente une section qui augmente d'amont en aval. Cette configuration permet d'améliorer encore plus l'évacuation de l'eau. En effet, comme l'eau avançant d'amont en aval trouve plus de volume libre, elle est donc évacuée avec plus de facilité.

Conformément à un autre mode de réalisation, plusieurs réseaux de rainures débouchent dans une même rainure principale. Ceci permet d'évacuer plus d'eau vers les rainures principales.

Avantageusement, la bande de roulement comprend une rainure circonférentielle globalement centrale, les rainures principales et les rainures additionnelles ne débouchant pas dans cette rainure circonférentielle. Cette rainure circonférentielle permet d'améliorer l'évacuation de l'eau sur sol mouillé au cours d'un roulage. Le fait que les rainures principales et secondaires ne débouchent pas dans cette rainure circonférentielle a comme avantage d'éviter la perturbation du flux d'eau à l'intérieur de ladite rainure circonférentielle.

Selon un mode particulier, tout ou partie des rainures principales sont reliées respectivement à la rainure circonférentielle par une incision. Une telle incision crée des arêtes sur la surface de la bande de roulement ce qui améliore l'adhérence sur sol humide.

Selon un autre mode de réalisation, au taux d'usure déterminé, la bande de roulement présente un taux d'entaillement surfacique supérieur ou égal à 35%. Un tel taux d'entaillement est important pour améliorer d'avantage l'évacuation de l'eau.

Selon une application particulière, le taux d'usure déterminé, à partir duquel la ou les rainures additionnelles apparaît(ssent) est supérieur à 20%.

D'autres caractéristiques et avantages apparaitront plus clairement à la lecture de la description suivante en référence aux dessins annexés, où :
- la figure 1 est une vue d'un pneumatique selon l'invention, à l'état neuf ;
- la figure 2 est une vue d'un pneumatique selon l'invention, dans un certain niveau d'usure ;
- La figure 3 est une vue d'un pneumatique selon un deuxième mode de réalisation, dans un certain niveau d'usure ;
- La figure 4 est une vue d'un pneumatique selon un troisième mode de réalisation dans lequel un pont de gomme délimite en partie le réseau de rainures ;
- La figure 5 est une vue d'un pont de gomme ayant une paroi inclinée ;
- la figure 6 est une vue d'un pont de gomme ayant une paroi inclinée et comportant une incision ;
- la figure 7 est une vue d'un réseau de rainures selon un troisième mode de réalisation particulier ;
- La figure 8 est une vue d'un mode de réalisation dans lequel plusieurs réseaux de rainures débouchent dans une rainure principale ;
- La figure 9 est une vue d'une bande de roulement conforme à l'invention, comportant une rainure circonférentielle centrale ;
- La figure 10 est une vue d'une bande de roulement conforme à l'invention, comportant une rainure circonférentielle centrale où tout ou partie des rainures principales est lié à cette rainure centrale par une incision.

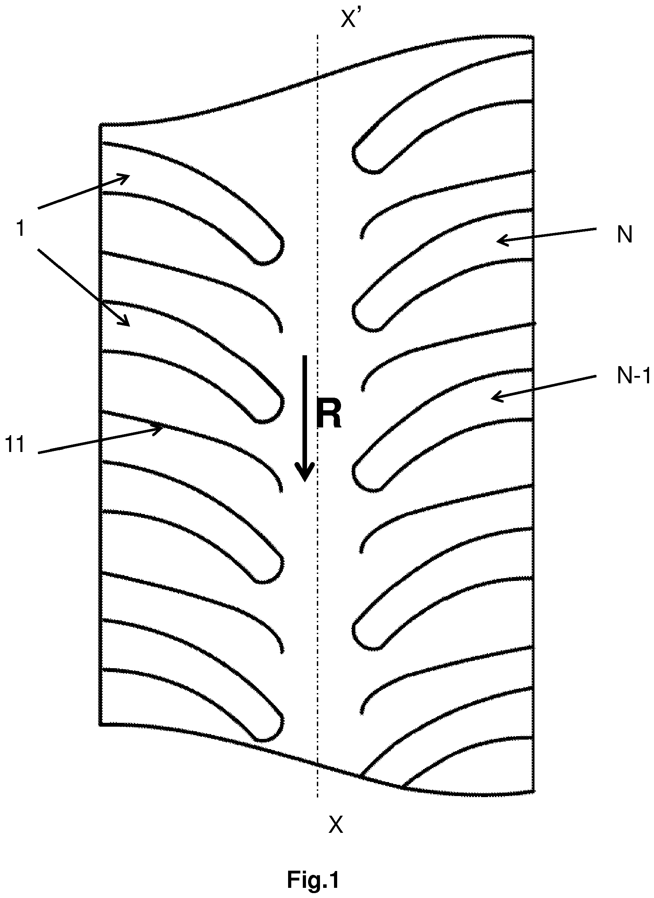

La figure 1 représente schématiquement une bande de roulement d'un pneumatique selon l'invention à l'état neuf.

Cette bande de roulement vient en contact avec la chaussée lors d'un roulage. Elle comporte une pluralité de rainures principales 1 disposées de part et d'autre d'un plan médian X-X' et au nombre de N de chaque coté. Chacune de ces rainures principales 1 débouche axialement, l'axe étant défini selon la direction parallèle à l'axe de rotation du pneumatique, à l'extérieur de cette bande de roulement. Ceci permet d'évacuer l'eau vers les cotés extérieurs du pneumatique lorsque le véhicule est en cours d'un roulage, c'est-à-dire en partant de l'extrémité de la rainure la plus proche de l'axe X-X' vers l'extrémité de la rainure la plus éloignée de l'axe X-X'. Chacune de ces rainures principales se prolonge axialement vers le plan médian X-X' de sorte que la pluralité des rainures principales forme un motif de forme générale en V. La pointe de ce V indique le sens de rotation préférentiel de cette bande de roulement. Ce sens de rotation est également indiqué par la flèche R.

De façon optionnelle, cette bande de roulement peut comporter à l'état neuf, au moins une incision 11 entre chaque deux rainures principales adjacentes selon la direction circonférentielle qu'on désigne par N-1 et N. Une telle incision permet d'améliorer l'adhérence sur un sol humide. Elle peut avoir différentes formes, par exemple, allongée parallèlement aux rainures principales N-1, N, comme montré sur la figure 1. Dans une telle configuration, elle peut notamment être située à équidistance des rainures principales N-1, N. Ceci permet d'équilibrer les forces entre les deux portions de bande de roulement, situées entre ladite incision et la rainure principale N-1, et entre ladite incision et la rainure principale N.

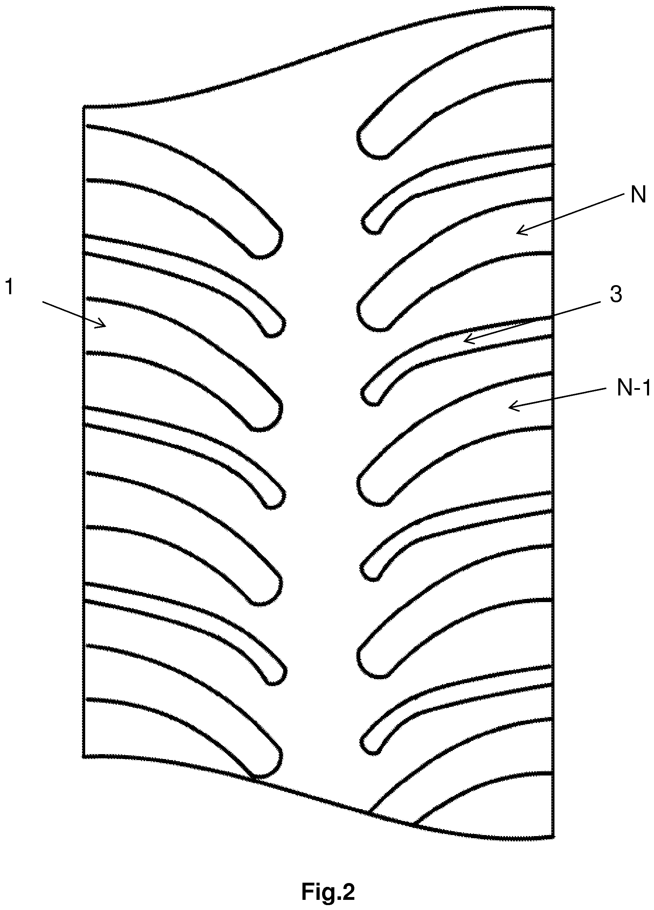

La figure 2 montre une vue d'une bande de roulement selon l'invention, dans un certain état d'usure. La bande se trouve dans cette forme lorsqu'un certain taux d'usure déterminé est atteint. Dans ce cas, au moins une rainure additionnelle 3 apparaît entre deux rainures principales adjacentes circonférentiellement N-1, N. Cette rainure additionnelle s'étend globalement parallèlement à ces deux rainures principales N-1, N. Une telle rainure présente l'avantage de compenser la perte d'efficacité d'évacuation d'eau, causée aux rainures principales par l'usure de la bande de roulement du pneumatique. Cette rainure additionnelle contribue, ainsi, à l'évacuation de l'eau de la même manière que les rainures principales en chassant l'eau du milieu de la bande de roulement vers les cotés extérieurs de la bande de roulement.

Dans une application particulière, le taux d'usure déterminé à partir duquel la ou les rainures additionnelles apparaît(ssent), est supérieur à 20%.

Pour optimiser encore plus l'évacuation de l'eau, l'apparition de cette rainure additionnelle, à ce taux d'usure déterminé, peut s'ajouter une condition sur le taux d'entaillement surfacique de la bande de roulement. Ce taux d'entaillement est de préférence supérieur ou égal à 35%.

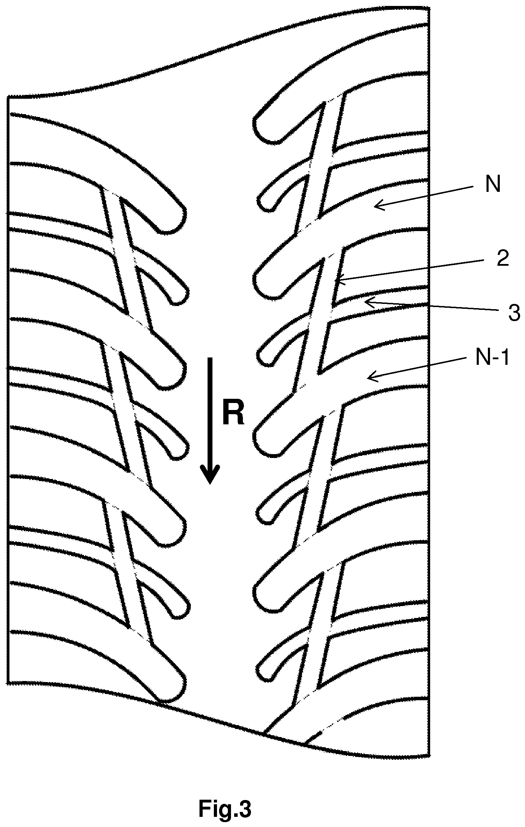

Dans un autre mode de réalisation illustré à la figure 3, lorsque le taux d'usure déterminé est atteint, au moins une rainure intermédiaire 2 apparaît entre les deux rainures principales adjacentes N-1, N. Cette rainure intermédiaire 2 s'étend à partir d'une rainure principale N selon la direction R, vers la rainure principale adjacente N-1, en coupant la rainure additionnelle 3. Ainsi, un réseau de rainures 2, 3, est formé par la rainure intermédiaire 2 et la rainure additionnelle 3.

Dans ce cas l'évacuation de l'eau récupérée par la rainure additionnelle 3 se fait au moins en partie vers la rainure intermédiaire 2 qui l'évacue ensuite vers les rainures principales N-1, N.

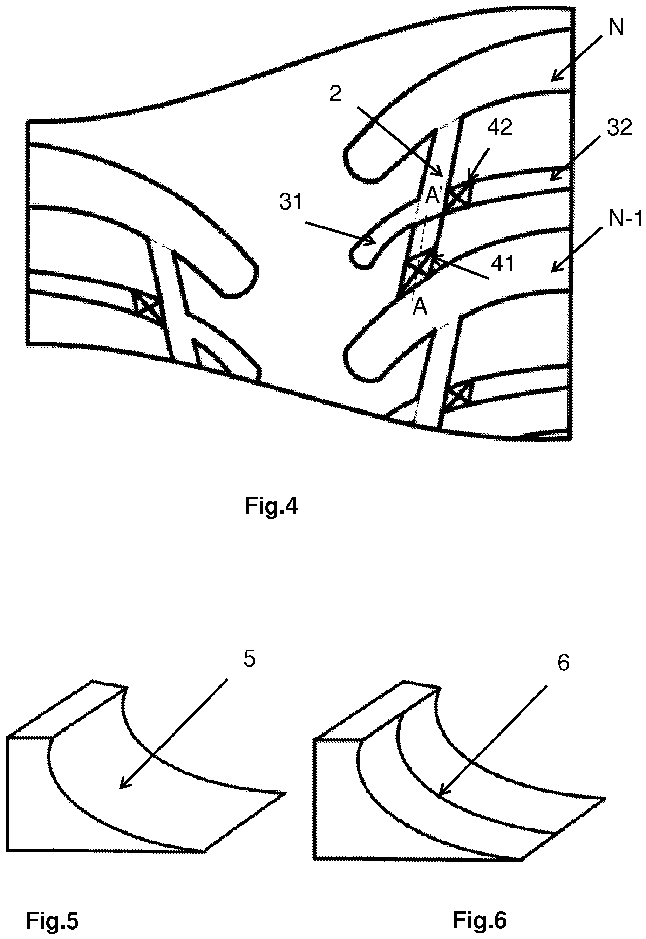

Dans le mode de réalisation illustré par la figure 4, au moins un pont de gomme 4 délimite en partie le réseau de rainures 2, 3. Cette délimitation sert à adapter le réseau de rainures à la capacité d'évacuation d'eau souhaitée. Un pont de gomme 41 peut, par exemple, séparer la rainure intermédiaire 2 de la rainure principale N-1. Un autre pont de gomme 42 peut, par exemple, couper la rainure additionnelle 3 en deux parties 31 et 32. La partie 31 débouchant dans la rainure additionnelle 2 et la partie 32 débouchant directement sur le coté l'extérieur de la bande de roulement.

Une forme particulièrement préférée d'un tel pont de gomme 4 est illustrée par la figure 5, qui représente une coupe selon l'axe AA' de la figure 4. Dans ce mode de réalisation, le pont de gomme 4 a une paroi 5 inclinée vers l'intérieur du réseau de rainures 2, 3. Ainsi, la hauteur du pont de gomme diminue de l'extérieur vers l'intérieur du volume formé par la rainure 2 et la rainure 3. Un avantage d'une telle réalisation est de favoriser la circulation de l'eau dans le réseau de rainures. En effet, l'eau descendant cette paroi est accélérée grâce à l'inclinaison de celle-ci. Ainsi, l'eau descendant la paroi du pont de gomme 41 arrive avec une certaine vitesse à la rainure intermédiaire 2 pour aller ensuite rejoindre la rainure principale N. De même, l'eau descendant le pont de gomme 42 arrive avec une certaine vitesse à la partie 32 et ainsi, évacuée rapidement vers le coté extérieur de la bande de roulement

Selon une deuxième forme illustrée par la figure 6, la paroi inclinée 5 du pont de gomme 4 comporte une incision 6 qui s'étend selon l'inclinaison de cette paroi inclinée 5. L'intérêt d'une telle incision réside dans le fait qu'elle donne plus de souplesse à la bande de roulement au niveau du pont de gomme. Ainsi, lorsque le véhicule est encours de roulage la mise à plat de la bande de roulement est améliorée, et ainsi le fonctionnement global du pneumatique.

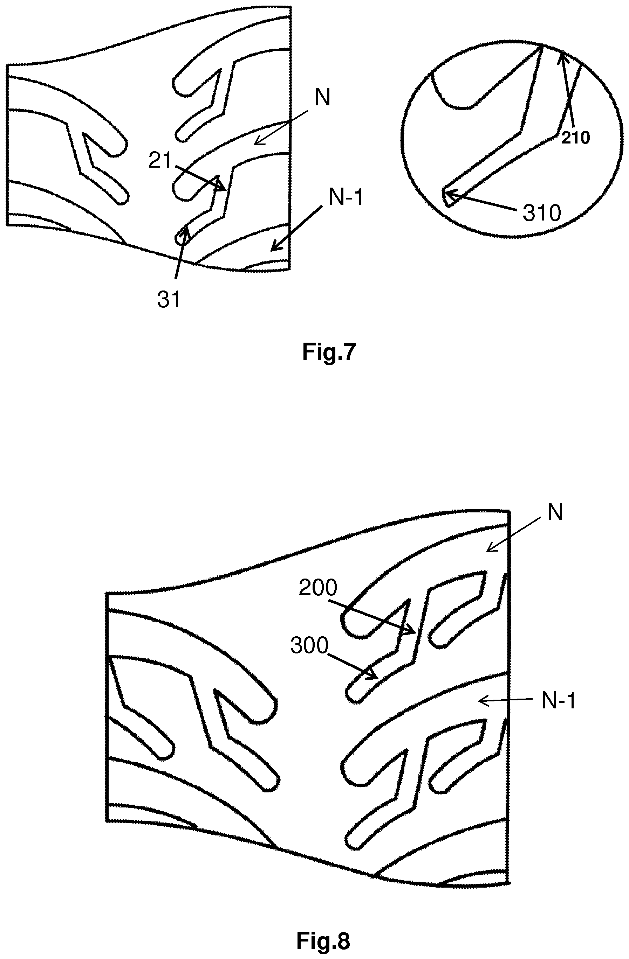

La figure 7 représente une variante de réalisation dans laquelle le réseau de rainures 21, 31 présente une section qui augmente de son extrémité amont 310 vers son extrémité aval 210 débouchant dans la rainure principale N. L'intérêt de cette architecture réside dans le fait que l'eau avançant d'amont en aval trouve plus de volume libre, elle est donc évacuée avec plus de facilité.

La figure 8 montre un autre mode de réalisation dans lequel la bande de roulement du pneumatique comporte plusieurs réseaux de rainures 200, 300 qui débouchent dans une même rainure principale 1. Dans ce cas de figure, l'eau récupérée par les rainures additionnelles 300 est dirigée majoritairement vers une rainures principale N.

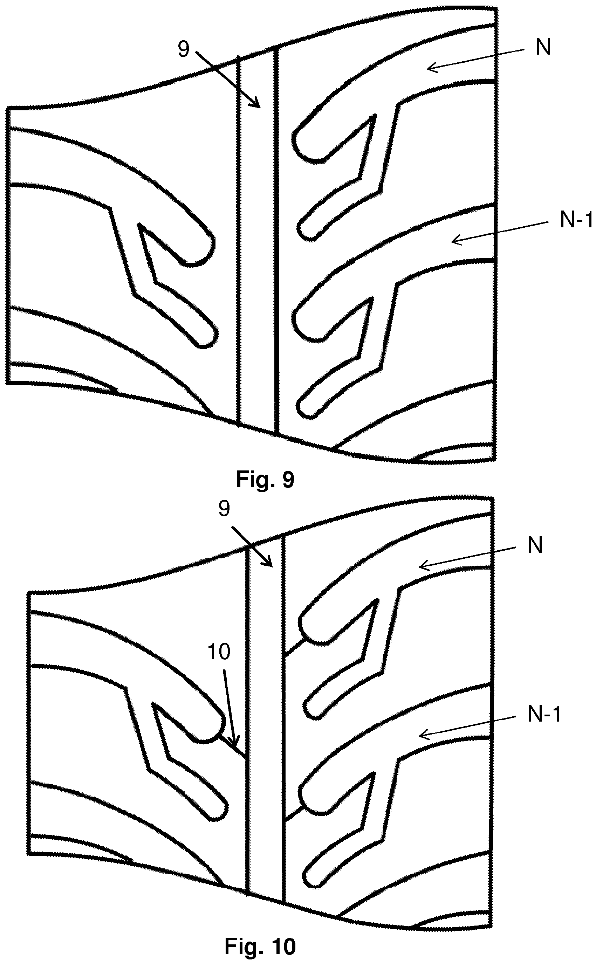

La figure 9 présente encore un autre mode de réalisation dans lequel la bande de roulement comprend une rainure circonférentielle 9 globalement centrale. Une telle rainure participe à l'évacuation de l'eau en cours de roulage du véhicule. En outre, les rainures principales 1 et les rainures additionnelles 3 ne débouchent pas dans cette rainure circonférentielle 9. Ceci a notamment pour avantage de ne pas perturber le flux d'eau à l'intérieur de ladite rainure circonférentielle.

Selon une variante, une partie ou totalité des rainures principales 1, est liée à cette rainure circonférentielle 9, par une incision 10, comme illustré par la figure 10. Une telle incision crée des arêtes sur la surface de la bande de roulement ce qui améliore l'adhérence sur sol humide.

Dans une autre variante, les rainures intermédiaires (2) sont présentes à l'état neuf sur le pneumatique.

L'invention n'est évidement pas limitée aux modes de réalisation présentés. Il est possible de prévoir diverses modifications sans pour autant sortir du cadre de l'invention.

## Revendications

1. Pneumatique comportant une bande de roulement comprenant une pluralité de rainures principales (1) disposées de part et d'autre d'un plan médian X-X', chacune de ces rainures principales (1) débouchant axialement à l'extérieur de ladite bande de roulement et se prolongeant axialement vers le plan médian X-X' de sorte que la pluralité des rainures principales forme un motif de forme générale en V, **caractérisé en ce que**, à partir d'un certain taux d'usure déterminé, au moins une rainure additionnelle (3) apparaît entre deux rainures principales adjacentes circonférentiellement (N-1, N), ladite rainure additionnelle s'étendant globalement parallèlement auxdites rainures principales (N-1, N), **en ce que** au moins une rainure intermédiaire (2) apparaît entre les deux rainures principales adjacentes (N-1, N), et **en ce que** le motif des rainures principales pointant selon une direction R, la rainure intermédiaire (2) s'étend à partir d'une des rainures principales selon cette direction R, en coupant la rainure additionnelle (3), de sorte à former un réseau de rainures (2, 3).

2. Pneumatique selon la revendication 1, **caractérisé en ce que**, la rainure intermédiaire (2) débouche dans chacune des rainures principales adjacentes (N-1, N).

3. Pneumatique selon l'une des revendications 1 à 2, **caractérisé en ce que** le réseau de rainures (2, 3) est délimité en partie par au moins un pont de gomme (4).

4. Pneumatique selon la revendication 3, **caractérisé en ce que** le pont de gomme comporte une paroi inclinée (5) vers l'intérieur du réseau de rainures (2, 3).

5. Pneumatique selon la revendication 4, **caractérisé en ce que** la paroi inclinée (5) comporte une incision (6) s'étendant selon l'inclinaison de cette paroi inclinée (5) .

6. Pneumatique selon l'une des revendications 3 à 5, **caractérisé en ce que** le réseau de rainures (2, 3), ayant une extrémité amont (31), et une extrémité aval (21) débouchant dans la rainure principale N, présente une section qui augmente d'amont en aval.

7. Pneumatique selon l'une des revendications 2 à 6, **caractérisé en ce que** plusieurs réseaux (2, 3) débouchent dans une même rainure principale (1).

8. Pneumatique selon l'une quelconque des revendications 1 à 7 **caractérisé en ce que** la bande de roulement comprend une rainure circonférentielle (9) globalement centrale, les rainures principales (1) et les rainures additionnelles (3) ne débouchant pas dans cette rainure circonférentielle (9).

9. Pneumatique selon la revendication 8, **caractérisé en ce que** tout ou partie des rainures principales (1) sont reliées respectivement à la rainure circonférentielle (9) par une incision (10).

10. Pneumatique selon l'une quelconque des revendications 1 à 9, **caractérisé en ce que**, au taux d'usure déterminé, la bande de roulement présente un taux d'entaillement surfacique supérieur ou égal à 35%.

11. Pneumatique selon l'une quelconque des revendications 1 à 10, **caractérisé en ce que** le taux d'usure déterminé à partir duquel la ou les rainures additionnelles apparaît(ssent) est supérieur à 20%.

## Patentansprüche

1. Luftreifen, der einen Laufstreifen aufweist, der eine Vielzahl von Hauptrillen (1) enthält, die zu beiden Seiten einer Mittelebene X-X' angeordnet sind, wobei jede dieser Hauptrillen (1) axial außen am Laufstreifen mündet und sich axial zur Mittelebene X-X' so verlängert, dass die Vielzahl der Hauptrillen ein Muster von allgemeiner V-Form bildet, **dadurch gekennzeichnet, dass** ausgehend von einer gewissen bestimmten Verschleißrate mindestens eine zusätzliche Rille (3) zwischen zwei in Umfangsrichtung benachbarten Hauptrillen (N-I, N) erscheint, wobei die zusätzliche Rille sich global parallel zu den Hauptrillen (N-I, N) erstreckt, dass mindestens eine Zwischenrille (2) zwischen den zwei benachbarten Hauptrillen (N-I, N) erscheint, und dass, da das Muster der Hauptrillen in eine Richtung R weist, die Zwischenrille (2) sich ausgehend von einer der Hauptrillen gemäß dieser Richtung R erstreckt, indem sie die zusätzliche Rille (3) schneidet, um ein Rillennetz (2, 3) zu bilden.

2. Luftreifen nach Anspruch 1, **dadurch gekennzeichnet, dass** die Zwischenrille (2) in jede der benachbarten Hauptrillen (N-I, N) mündet.

3. Luftreifen nach einem der Ansprüche 1 bis 2, **dadurch gekennzeichnet, dass** das Rillennetz (2, zum Teil von mindestens einem Gummisteg (4) begrenzt wird.

4. Luftreifen nach Anspruch 3, **dadurch gekennzeichnet, dass** der Gummisteg eine zum Inneren des Rillennetzes (2, 3) geneigte Wand (5) aufweist.

5. Luftreifen nach Anspruch 4, **dadurch gekennzeichnet, dass** die geneigte Wand (5) einen Einschnitt (6) aufweist, der sich gemäß der Neigung dieser geneigten Wand (5) erstreckt.

6. Luftreifen nach einem der Ansprüche 3 bis 5, **dadurch gekennzeichnet, dass** das Rillennetz (2, 3), das ein stromaufwärtiges Ende (31) und ein stromabwärtiges Ende (21) hat, das in die Hauptrille N mündet, einen Querschnitt aufweist, der von stromaufwärts nach stromabwärts zunimmt.

7. Luftreifen nach einem der Ansprüche 2 bis 6, **dadurch gekennzeichnet, dass** mehrere Netze (2, 3) in eine gleiche Hauptrille (1) münden.

8. Luftreifen nach einem der Ansprüche 1 bis 7, **dadurch gekennzeichnet, dass** der Laufstreifen eine global mittlere Umfangsrille (9) aufweist, wobei die Hauptrillen (1) und die zusätzlichen Rillen (3) nicht in diese Umfangsrille (9) münden.

9. Luftreifen nach Anspruch 8, **dadurch gekennzeichnet, dass** alle oder ein Teil der Hauptrillen (1) mit der Umfangsrille (9) durch einen Einschnitt (10) verbunden sind.

10. Luftreifen nach einem der Ansprüche 1 bis 9, **dadurch gekennzeichnet, dass** bei der bestimmten Verschleißrate der Laufstreifen einen Negativprofilanteil größer als oder gleich 35% aufweist.

11. Luftreifen nach einem der Ansprüche 1 bis 10, **dadurch gekennzeichnet, dass** die bestimmte Verschleißrate, von der ausgehend die zusätzliche(n) Rille(n) erscheint (erscheinen), höher als 20% ist.

## Claims

1. Tyre comprising a tread comprising a plurality of main grooves (1) arranged on each side of a midplane X-X', each of these main grooves (1) opening axially to the outside of the said tread and extending axially towards the midplane X-X' so that the plurality of main grooves forms a pattern in the overall shape of a V, **characterized in that**, above and beyond a determined certain degree of wear, at least one additional groove (3) appears between two circumferentially adjacent main grooves (N-1, N), the said additional groove running parallel overall to the said main grooves (N-1, N), **in that** at least one intermediate groove (2) appears between the two adjacent main grooves (N-1, N), and **in that**, with the pattern of the main grooves pointing in a direction R, the intermediate groove (2) extends from one of the main grooves in this direction R, intersecting the additional groove (3), so as to form a network of grooves (2, 3).

2. Tyre according to Claim 1, **characterized in that** the intermediate groove (2) opens into each of the adjacent main grooves (N-1, N).

3. Tyre according to one of Claims 1 and 2, **characterized in that** the network of grooves (2, 3) is delimited in part by at least one bridge of rubber (4).

4. Tyre according to Claim 3, **characterized in that** the bridge of rubber comprises an inclined wall (5) inclined towards the inside of the network of grooves (2, 3).

5. Tyre according to Claim 4, **characterized in that** the inclined wall (5) comprises a sipe (6) extending along the inclination of this inclined wall (5).

6. Tyre according to one of Claims 3 to 5, **characterized in that** the network of grooves (2, 3), having an upstream end (31) and a downstream end (21) opening into the main groove N, has a cross section that increases from upstream to downstream.

7. Tyre according to one of Claims 2 to 6, **characterized in that** several networks (2, 3) open into one same main groove (1).

8. Tyre according to any one of Claims 1 to 7, **characterized in that** the tread comprises a circumferential groove (9) that is central overall, the main grooves (1) and the additional grooves (3) not opening into this circumferential groove (9).

9. Tyre according to Claim 8, **characterized in that** all or some of the main grooves (1) are connected respectively to the circumferential groove (9) by a sipe (10).

10. Tyre according to any one of Claims 1 to 9, **characterized in that**, at the determined degree of wear, the tread has a surface void ratio greater than or equal to 35%.

11. Tyre according to any one of Claims 1 to 10, **characterized in that** the determined degree of wear above and beyond which the additional groove or grooves appears (appear) is greater than 20%.
